# EUROPEAN PATENT APPLICATION

(11) **EP 4 023 331 A1**
(43) Date of publication of application: **06.07.2022**
(21) Application number: 20217858.8
(22) Date of filing: 30.12.2020
(51) Int. Cl.: B01J 21/06, B01J 23/75, B01J 23/889, B01J 35/00, B01J 35/02, B01J 35/06, B01J 37/00, C07C 1/00

(54) **HYDROGENATION CATALYST AND HYDROGENATION PROCESS**

(71) Applicant: Shell Internationale Research Maatschappij B.V., 2596 HR The Hague (NL)
(72) Inventor: MEEUWISSEN, Jurjen, 1031HW Amsterdam (NL); MUNNIK, Peter, 1031HW Amsterdam (NL); VAN DER HAUW, Menno Feico, 1031HW Amsterdam (NL); KAMANS-SCHUITEMA, Anna Maria, 1031HW Amsterdam (NL)
(74) Representative: Shell Legal Services IP

(57) **Abstract**

The present invention relates to a shaped hydrogenation catalyst particle comprising a catalytically active metal, inert fibers and a support material comprising fibers having a length in the range of 0.1 to 6.0 mm and an aspect ratio of at least 10. The catalyst particle has an aspect ratio of at least 2. And the catalyst has an having a surface to volume (S/V) ratio of at least 3.0 mm-1. Further the invention relates to a hydrogenation process in which said catalyst is used.

## Description

The present invention relates to a shaped hydrogenation catalyst particle comprising a catalytically active metal, inert fibers and a support material comprising fibers having a length in the range of 0.1 to 6.0 mm and an aspect ratio of at least 10. The catalyst particle has an aspect ratio of at least 2. And the catalyst has an having a surface to volume (S/V) ratio of at least 3.0 mm-1. Further the invention relates to a hydrogenation process in which said catalyst is used.

### Background of the Invention

Many documents are known describing processes for the catalytic conversion of hydrocarbonaceous feedstocks, especially methane, natural gas and/or associated gas, into liquid products, especially methanol and liquid hydrocarbons, particularly paraffinic hydrocarbons.

The Fischer Tropsch process can be used as part of the conversion of hydrocarbonaceous feed stocks into liquid and/or solid hydrocarbons. Generally, the feedstock (e.g. natural gas, associated gas, biomass and/or coal-bed methane, coal) is converted in a first step into a mixture of hydrogen and carbon monoxide (this mixture is often referred to as synthesis gas or syngas). The synthesis gas is then fed into a reactor where it is converted in one or more steps over a suitable catalyst at elevated temperature and pressure into compounds ranging from methane to high molecular weight modules comprising up to 200 carbon atoms, or, under particular circumstances, even more.

In the Fischer-Tropsch synthesis for example, as in many other chemical reactions, the catalyst, the reactants and a diluent, if present, in contact with one another usually form a three-phase system of gas, liquid and solid. Such three phase systems may be operated, for example, in a slurry-bubble reactor or in a packed-bed reactor.

A packed-bed, or fixed bed, reactor may comprise a packed bed of solid, relatively coarse catalyst particles through which there is a flow of gas and liquid. Normally such particles have a longest internal straight length of at least 1mm. The current invention relates to catalysts and catalyst precursors suitable for use in a packed-bed reactor and a longest internal straight length of at least 1mm.

In a packed bed reactor, catalyst particles are relatively large and can have different shapes and sizes. For example, in a fixed bed reactor beads, spheres, saddles or the like can be used. Also, extrudates, for example with a trilobe shape, can be used in a packed bed reactor.

Some types of packed beds may be referred to as fixed bed, multitubular fixed bed, immobilized slurry, trickle flow fixed bed, down-flow trickle flow packed bed, liquid up-flow packed bed, up-flow liquid full fixed bed, etc.

The type, size, and shape of the catalyst used in a packed bed reactor may have an influence on the quantity of catalytically active component per reactor volume, the pressure drop over the packed catalyst bed, and the ease with which the reactor can be filled. In a packed bed design, very small catalyst particles are undesired. These small particles may cause problems, they may increase the pressure drop over the reactor when the reactor is put to use, they may end up in the product, clog equipment downstream of the fixed bed etc.

Another cause for unwanted pressure drop over a catalyst bed is due the average catalyst particle length being to small. A too low average particle length may be caused by the breaking apart of catalyst particles resulting several smaller catalyst particles. In other words, the average catalyst particle size of the loaded catalyst particles is smaller than prior to loading.

Nevertheless, due to the delicate nature of the catalysts or catalyst precursors, broken catalyst particles, fines and dust are often formed during transport and handling of packed bed particles. Also, when carriers for catalysts are transported broken carrier particles, fines and dust can be formed. When installing packed bed catalyst or catalyst precursor particles into a reactor broken catalyst particles, fines and dust are often formed.

Further due to the structure of a packed bed catalysts lower in the bed will experience a higher weight than particles higher up in the bed. This may result in particles experience a higher weight, generating fines due to cracking and crushing of the catalyst particles.

There is a need in the field for particles that have an improved strength generating less particles and fines.

### Summary of the Invention

The present inventors have surprisingly found that the presence of fibers in the catalyst particles results in catalyst particles having improved strength. Said particles are less prone to breaking and generate less small particles and fines. This results in less fines and particles being generated due to handling of the catalyst particles.

Accordingly, in a first aspect of the invention there is provided a shaped catalyst particle comprising fibers.

In a further aspect, there is provided a process for manufacturing said shaped catalyst.

### Brief Description of the Drawings

Figure 1. shows two graphs depicting breakage and fines make of TiO2-extrudates reinforced with fibers.
Figure 2. shows a bar graph with breakage and fines make of TL1.6 TiO2-extrudates reinforced with ± 0.3 vol% fibers of different kinds.
Figure 3. shows a graph of breakage results for different cobalt containing extrudates.
Figure 4. shows three graphs of breakage results for different cobalt containing extrudates.
Figure 5. shows a cross section of a quadrilobed shape.

### Detailed Description of the Invention

To facilitate an understanding of the present invention, it is useful to define certain terms.

With shaped catalyst particle is meant, a catalyst particle having a pre-defined cross-sectional shape and that is linear in the longitudinal direction.

One way of producing a shaped catalyst particle such as described above is to feed a paste comprising a support material and optionally a catalytically active component or a precursor thereof from a hopper or compactor into an extruder. Where the extrusion process is for the formation of a Fischer-Tropsch catalyst, the paste may comprise a catalytically active metal and/or a promoter. A number of dies at the end of the extruder each comprise a plurality of small apertures through which the paste is forced.

Another way of producing shaped catalyst particles is by compressing support material in a closed die, resulting in tablets.

In an embodiment of the present invention the shaped hydrogenation catalyst particle comprising a catalytically active metal, inert fibers and a support material wherein:
- the fibers have a length in the range of 0.1 to 6.0 mm and an aspect ratio of at least 10.
- the catalyst particle has an aspect ratio of at least 2; and
- the catalyst has an having a surface to volume (S/V) ratio of at least 3.0 mm-1

The fibers are preferably present as separate fibers. This means the fibers do not form a structure such as a sheet, woven material or knitted structure.

Extrudates used for catalytic reactions have sufficient strength to be produced, impregnated, coated, dried, calcined, reduced, transported and finally loaded into the reactor. Too short extrudates or too much fines in the reactor will give undesired high pressure drops. With fines is meant small particles separated from catalyst particles due to wear and tear caused by handling of the catalyst particles. Fines are particles having a size smaller than the diameter of the pre-defined cross-sectional shape of the particle the fine originates from.

The fibers provide for additional strength to the catalyst or catalyst support material. This additional strength to the catalyst or catalyst support material allows for the extrusion of shaped catalyst particles with shapes and/or dimensions which, without fibers, would result in very weak catalyst particles. Advantageously, the presence of fibers in the catalyst carrier material may also allow for catalyst particles with a higher porosity.

Another benefit of the present invention is that smaller diameter sized catalyst particles can be used. Due to the increased strength of the catalyst material smaller particles can be used in industrial scale reactors. The increased strength namely, allows for the catalyst particles to be used in reactor tubes of industrial scale without being crushed under the weight of large packed catalyst beds or damaged during loading. The use of smaller sized catalyst particles results in an overall increase of the catalyst surface per weight of catalyst particles compared to larger catalyst particles.

In an embodiment of the invention, the inert fibers are are composed of a material selected from the group consisting of silica, alumina, titania, silicon carbide, titanium carbide, carbon, E glass, synthetic material, natural material or combinations thereof. The inventors have found that these kinds of fibers provide for good strength to the shaped catalyst particles while not disadvantageously influencing the activity of the catalyst.

In an embodiment of the present invention, the support material is a ceramic material. Preferably the ceramic material is selected from the group consisting of silica, titania, alumina, zirconia or combinations thereof.

In an embodiment of the present invention, the particles have a cylindric, open-ring shape or a cross sectional dilobed, trilobed, star, or quadrilobed shape. The presence of the fibers allows for these particles to be manufactured at diameters smaller than the prior art particles. Due to the smaller diameter higher surface to volume (S/V) ratios may be achieved. Preferably the surface to volume ratio is at least 5.0 mm⁻¹ and more preferably at least 10.0 mm⁻¹.

In an embodiment of the present invention, the shaped hydrogenation catalyst particle comprises an active metal. Said metal is selected from the group consisting of Fe, Co, Ru, Ni, Re, or combinations thereof.

In an embodiment of the present invention, the shaped hydrogenation catalyst particle further comprises one or more promoters. Preferably, the one or more promoters is/are selected from the group consisting of Pt, Pd, Re, Mn, V, Ca, Mg, Zn, Zr, Na, K, Li, F, Cl, I or combinations thereof.

In an embodiment of the present invention, at least 80% of the fibers in the shaped hydrogenation catalyst particle, are substantially orientated along the longitudinal axis of the shaped catalyst. The orientation is determined on sight by using a microscope. The orientation of fibers may be achieved by extrusion of the particles.

In an embodiment of the present invention, the shaped hydrogenation catalyst particle has a porosity of at least 30 vol%. For extruded catalyst particles without fiber reinforcement, such high porosity can be reached but at the cost of strength of the particle. Consequently, these particles show higher breakage and fine particle generation. The particles according to this embodiment however, have good strength.

In an embodiment of the present invention, the shaped hydrogenation catalyst particle is a Fischer-Tropsch (FT) catalyst. Said catalyst catalyzes the Fischer-Tropsch reaction and the active metal is preferably selected from the group consisting of cobalt, iron, ruthenium, nickel or combinations thereof.

Products of the Fischer-Tropsch synthesis may range from methane to heavy paraffinic waxes. Preferably, the production of methane is minimized and a substantial portion of the hydrocarbons produced have a carbon chain length of a least 5 carbon atoms. Preferably, the amount of C5+ hydrocarbons is at least 60% by weight of the total product, more preferably, at least 70% by weight, even more preferably, at least 80% by weight, most preferably at least 85% by weight.

The Fischer-Tropsch catalyst according to the present invention is especially suitable for use in reactor tubes. Reactor tubes are typically loaded with catalyst particles by dropping the particles into a tube. In industrial scale reactor tubes this drop might be such that on impact a catalyst particle cracks, chips or gets damaged otherwise. This damage may generate smaller particles (fines). As the catalyst according to the present invention is stronger due to the presence of fibers, catalyst particles are damaged less during loading and therefore less (in amount) small particles (fines) are generated. With small particles or smaller particles is meant particles being separated from catalyst particles due to for example, damaging or cracking of the catalyst particle.

In an embodiment of the invention the Fischer-Tropsch catalyst is present in at least one reactor tube, said tube having an upstream opening and a downstream opening. Upstream and downstream are defined herein with respect to the flow of syngas, i.e. the flow of the mixture of hydrogen and carbon monoxide, in a Fischer Tropsch reactor tube. Reference herein to the upstream opening of the reactor tube is thus the opening of the reactor tube through which synthesis gas is supplied during Fischer Tropsch reaction. Reference herein to the downstream opening of the reactor tube is to the other opening of said tube through which Fischer-Tropsch products and remaining hydrogen and carbon monoxide exit the tube.

In an embodiment the Fischer-Tropsch catalyst is present in the reactor tube as a packed bed. In this embodiment syngas is supplied to the catalyst via the upstream opening of the reactor tube.

Fischer-Tropsch catalysts are known in the art, and typically include a Group VIII metal component, preferably cobalt, iron and/or ruthenium, more preferably cobalt. Typically, the catalysts comprise a catalyst carrier. The catalyst carrier is preferably porous, such as a porous inorganic refractory oxide, more preferably alumina, silica, titania, zirconia or mixtures thereof.

The optimum amount of catalytically active metal present on the carrier depends inter alia on the specific catalytically active metal. Typically, the amount of cobalt present in the catalyst may range from 1 to 100parts by weight per 100 parts by weight of carrier material, preferably from 10 to 50 parts by weight per 100 parts by weight of carrier material.

A suitable FT catalyst comprises iron as this catalyst is suited for the conversion of syngas with lower hydrogen to carbon monoxide ratio as typically obtained. In the process according to the present invention cobalt based Fischer-Tropsch catalyst is preferred. A most suitable catalyst comprises cobalt as the catalytically active metal and zirconium as a promoter. Another most suitable catalyst comprises cobalt as the catalytically active metal and manganese and/or vanadium as a promoter.

The promoter, if present in the FT catalyst, is typically present in an amount of from 0.1 to 60 parts by weight per 100 parts by weight of carrier material. It will however be appreciated that the optimum amount of promoter may vary for the respective elements which act as promoter. If the catalyst comprises cobalt as the catalytically active metal and manganese and/or vanadium as promoter, the cobalt : (manganese + vanadium) atomic ratio is advantageously at least 12:1.

In an embodiment the Fischer-Tropsch catalyst comprises a promoter. The catalytically active metal may be present in the catalyst together with one or more metal promoters or co- catalysts. The promoters may be present as metals or as the metal oxide, depending upon the particular promoter concerned. Suitable promoters include oxides of metals from Groups IIA, IIIB, IVB, VB, VIB and/or VIIB of the Periodic Table, oxides of the lanthanides and/or the actinides. Preferably, the catalyst comprises at least one of an element in Group IVB, VB and/or VIIB of the Periodic Table, in particular titanium, zirconium, manganese and/or vanadium. As an alternative or in addition to the metal oxide promoter, the catalyst may comprise a metal promoter selected from Groups VIIB and/or VIII of the Periodic Table. The promoter is preferably selected from the group consisting of Pt, Pd, Re, Mn, V, Ca, Mg, Zn, Zr, Na, K, Li, F, Cl, I or combinations thereof. Most preferred metal promoters include rhenium, platinum and palladium.

The inventors noted that upon trying to increase the amount of catalytically active material in catalyst particles known in the art, the strength of the catalytic particle decreases. By adding fibers to the materials during manufacturing of catalyst particles with higher amounts of catalytically active material a catalyst particle is obtained with higher activity while having enough strength to be suitably used in industrial scale installations and processes.

In an embodiment the Fischer-Tropsch catalyst comprises maximally 10 w% (based on the total weight of the catalyst particle) fibers and more preferably maximally 5 w%. In an embodiment the Fischer-Tropsch catalyst comprises maximally 2 w% fibers.

The present invention relates to a process for hydrogenating a reactant comprising the steps of:
- Providing a gas mixture comprising hydrogen and a further reactant;
- performing a hydrogenation reaction using the mixture as obtained in step (a); and
- recovering a hydrogenated product and optionally an off-gas from the hydrogenation reaction;
wherein step (b) comprises the step of contacting the gas mixture of step (a) with a fixed bed comprising the catalyst according to any one of the preceding claims.

In an embodiment of the invention, the hydrogenation reaction is a Fischer-Tropsch reaction, the gas mixture comprises hydrogen and carbon monoxide and the hydrogenated product comprises paraffins.

In an embodiment of the invention, the gas mixture is obtained from a partial oxidation reaction wherein a carbonaceous gas and an oxidative gas are provided to a partial oxidation reactor and converted into the gas mixture.

In step (a) a carbonaceous feedstock is partially oxidized with an oxygen comprising gas. This is also referred to as gasification. The carbonaceous feedstock may be coal, biomass or natural gas.

In an embodiment, the gasification in step (a) may be carried out by partially oxidizing natural gas. The gasification in step (a) may be carried out by partially oxidizing natural gas according to the shell gasification process (SGP) by partial oxidation of natural gas using pure oxygen.

Partial oxidation of natural gas using pure oxygen may be operated at 1100 to 1700°C. Preferably partial oxidation of natural gas using pure oxygen is operated at 1300 to 1500°C and pressures up to 70 bar. Another example of a process for partially oxidizing natural gas is described in WO9603345A1 where a mixture of carbon monoxide and hydrogen is prepared by partial oxidation of natural gas in a co-annular burner using 99.5% pure oxygen and optionally carbon dioxide as moderator gas and in the absence of a catalyst. A further example is described in WO2008006787A2. In the process of WO2008006787A2 partial oxidation on a methane comprising feed is performed using a multi-orifice burner provided with an arrangement of separate passages, wherein the gaseous hydrocarbon having at elevated temperature flows through a passage of the burner, an oxidizer gas flows through a separate passage of the burner and wherein the passage for gaseous hydrocarbon feed and the passage for oxidizer gas are separated by a passage through which a secondary gas flows, wherein the secondary gas comprises hydrogen, carbon monoxide and/or a hydrocarbon.

In an embodiment of the invention, the step of contacting comprises:
- A first step in which synthesis gas is contacted with a Fischer-Tropsch catalyst obtaining a second gas mixture;
- A second step of contacting the second gas mixture with the catalyst according to the previous claims to obtain a third gas mixture;
wherein the second and third gas mixtures comprise water/steam, hydrogen, carbon monoxide, carbon dioxide and hydrocarbons.

In an embodiment of the invention, both steps of the present process are carried out at a temperature in the range from 125 to 350 °C, more preferably 175 to 275 °C, most preferably 200 to 260 °C. The pressure preferably ranges from 5 to 150 bar abs., more preferably from 5 to 80 bar abs.

The gaseous hourly space velocity may very within wide ranges and is typically in the range from 1500 to 10000 Nl/l/h, preferably in the range from 2500 to 7500 Nl/l/h. The Fischer-Tropsch synthesis is preferably carried out in multi-tubular reactor. In such a reactor several of the previously described reactor tubes are present.

Preferably, the superficial gas velocity of the synthesis gas is in the range from 0.5 to 50 cm/sec, more preferably in the range from 5 to 35 cm/sec.

An aspect of the invention relates to a method of manufacturing a catalyst according to the present invention. The method comprises the step of: (a) co-mulling of a carrier material, fibers and catalytic material (or a precursor thereof) to obtain a co-mulled material.

In an aspect of the invention the process further comprises the step of:(b) shaping and drying of the co-mulled material obtained in step (a) to obtain a shaped material.

Optionally the co-mulled material is shaped without drying or the co-mulled material is further used without shaping and drying.

Typically, the ingredients of the mixture are mulled for a period of from 5 to 120 minutes, preferably from 15 to 90 minutes. During the mulling process, energy is put into the mixture by the mulling apparatus. The mulling process may be carried out over a broad range of temperature, preferably from 15 to 90 °C. As a result of the energy input into the mixture during the mulling process, there will be a rise in temperature of the mixture during mulling. The mulling process is conveniently carried out at ambient pressure. Any suitable, commercially available mulling machine may be employed.

To improve the flow properties of the mixture, it is preferred to include one or more flow improving agents and/or extrusion aids in the mixture prior to extrusion. Suitable additives for inclusion in the mixture include fatty amines, quaternary ammonium compounds, polyvinyl pyridine, sulphoxonium, sulphonium, phosphonium and iodonium compounds, alkylated aromatic compounds, acyclic mono-carboxylic acids, fatty acids, sulphonated aromatic compounds, alcohol sulphates, ether alcohol sulphates, sulphated fats and oils, phosphonic acid salts, polyoxyethylene alkylphenols, polyoxyethylene alcohols, polyoxyethylene alkylamines, polyoxyethylene alkylamides, polyacrylamides, polyols and acetylenic glycols. Preferred additives are sold under the trademarks Nalco and Superfloc.

Optionally, burn-out materials may be included in the mixture, prior to extrusion, in order to create macropores in the resulting extrudates. Suitable burn-out materials are commonly known in the art.

In an aspect of the invention shaping is effected by extrusion of the co-mulled material. Extrusion may be effected using any conventional, commercially available extruder. In particular, a screw-type extruding machine may be used to force the mixture through the orifices in a suitable die-plate to yield extrudates of the desired form. The strands formed upon extrusion may be cut to the desired length.

In an aspect of the invention the process further comprises the step of calcining or drying of the shaped material obtained in step (d). Calcination is effected at elevated temperature, preferably at a temperature between 400 and 750 °C, more preferably between 500 and 650 °C. The duration of the calcination treatment is typically from 5 minutes to several hours, preferably from 15 minutes to 4 hours. Suitably, the calcination treatment is carried out in an oxygen-containing atmosphere, preferably air. It will be appreciated that, optionally, the drying step and the calcining step can be combined.

While the invention has been described in terms of what are presently considered to be the most practical and preferred embodiments, it is to be understood that the disclosure need not be limited to the disclosed embodiments. It is intended to cover various modifications, combinations and similar arrangements included within the spirit and scope of the claims, the scope of which should be accorded the broadest interpretation so as to encompass all such modifications and similar structures. The present disclosure includes any and all embodiments of the following claims. The subject-matter of the appended claims form an integral part of this description by way of this reference.

It should also be understood that a variety of changes may be made without departing from the essence of the invention. Such changes are also implicitly included in the description. They still fall within the scope of this invention. It should be understood that this disclosure is intended to yield a patent covering numerous aspects of the invention both independently and as an overall system and in both method and apparatus modes.

Any patents, publications, or other references mentioned in this application for patent are hereby incorporated by reference. In addition, as to each term used, it should be understood that unless its utilization in this application is inconsistent with such interpretation, common dictionary definitions should be understood as incorporated for each term and all definitions, alternative terms, and synonyms such as contained in at least one of a standard technical dictionary recognized by artisans.

### Examples

### Example 1.

### One-meter Drop Test

With this method extrudate batches can be compared in their tendency to break and to make fines. Each extrudate batch is dropped from one-meter height on a steel plate. The amount of fines made during the fall is determined, and length analyses before and after falling are done and compared.

Each batch was subsequently broken and sieved to obtain extrudates with an APL (Average Particle Length) of 4.0 mm, which was analyzed with the Camsizer. After the one-meter fall, each batch of extrudates was sieved to determine the amount of fines made by the fall. After this, again a length analysis was done, to compare the APL and the amount of longs with the data before falling.

The parameters obtained are the decrease in average particle length (APL reduction), the reduction of the 'longs' (reduction of 6 - 8.5 mm extrudates) and the fines make upon falling.

Two batches of P25 extrudates are compared in the one meter Drop Test. The first batch is 100% TiO2 while the extrudates in the second batch contain 1% e-glass fibers. In table 1 the results are depicted, clearly showing that the Drop Test indeed demonstrates a strength increase because of the fibers present in the extrudates while maintaining similar physical properties.

Compared to the batch without fibers, the average particle length (APL) of the fiber reinforced batch did not reduce much, less longs are broken in the fall and less fines are made.

**Table 1.**

| **P25 extrudates** | | **no fibers** | **+1% e-glass fibers** |
|---|---|---|---|
| SCS (N/cm) | | 157 | 158 |
| **Drop Test** | **Fines make (%)** | **0.47** | **0.10** |
| | **APL reduction (%)** | **7.9** | **1.2** |
| | **Longs reduction (%)** | **57** | **10** |

### Example 2.

### Fiber reinforcement of TiO2 extrudates

TiO2-extrudates with different wt% of glass fibers were made. The glass fiber used is chopped e-glass with a length of approximately 3 mm and a diameter of approximately 10 micron (both manufacturer specifications). The strength of the obtained TiO2/fiber batches was tested in the one-meter Drop Test. This experiment was repeated with basalt fibers (length 4 mm, diameter 12-16 micron).

The extrudate batches were made by adding fibers to 200 grams of already prepared TiO2 mix. After adding, the mix was mixed/molded another 10 minutes to homogenously spread the fibers trough the mix. After this, the mix was extruded on a plug flow extruder through a TL1.6 plug. The obtained extrudates were calcined at 450 °C. Also, a batch of extrudates without fibers was prepared in this manner. Except for the different amount of fibers that are used all the extrudates batches are the same in that they are all TL shaped, have the same diameter and the same porosity.

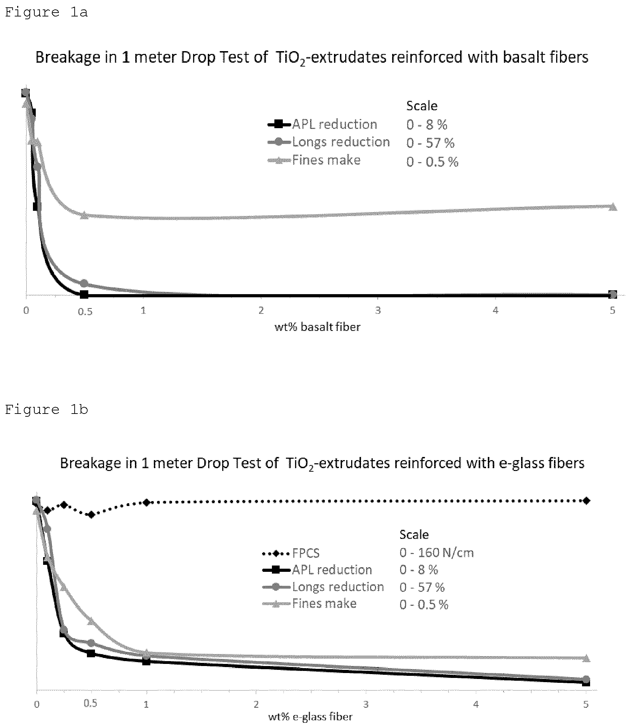

In Figure 1a and 1b the results are depicted. Figure 1a shows the reduced breakage and fines make of TiO2-extrudates reinforced with e-glass fibers. (Fiber used is e-glass with 10 µm diameter and 3 mm length) and Figure 1b shows the reduced breakage and fines make of TiO2-extrudates reinforced with basalt fibers. (Fiber used is basalt with 12-16 µm diameter and 4 mm length). The horizontal axe shows the amount of fibers added to the mix, starting of course with the TiO2 extrudates with no fibers (plain P25 extrudates). The vertical scale is chosen in such a way that the APL decrease, the longs reduction and the fines make of extrudates without fibers are maximum and approximately at the same level.

However, both graphs show that adding fibers does have a big effect on reducing the breakage due to falling. The fines make as well as the length reduction decrease rapidly with increasing fiber concentrations and only 0.1 to 0.5 wt% is needed to get significantly stronger extrudates.

The side crush strength (indicated as flat plate crush strength (FPCS)) is also depicted in the graph with e-glass concentrations showing no change at all with increasing fiber concentration.

### Example 3

### Different kinds of fibers

Different kinds of fibers were used to reinforce TiO2 extrudates and are listed in table 2. 0.5 wt% of each fiber was added to 200 grams of already prepared TiO2 mix after which another 10 minutes was mixed/molded to homogenously spread the fibers through the mix. After this, the mix was extruded on a plug flow extruder through a TL (trilobe)1.6 plug. The obtained extrudates were calcined at 450 °C. Also, a batch of extrudates without fibers was prepared in this manner.

**Table 2.**

| **Fiber** | **Fiber name** | **Diameter fiber (µm)** | **Starting Length fiber (mm)** | **Chopped/Milled** |
|---|---|---|---|---|
| e-glass | E-Glass FG 400/600 | 11.5 | 0.6 | milled |
| e-glass | E-Glass FG 400/60 | 11.5 | 0.23 | milled |
| e-glass | glass C50-R | 4.1 | 3.5 | milled |
| e-glass | glass A06-F | 0.65 | 0.60 | milled |
| Si-glass | FG455/300 | 9 | 0.3 | milled |
| Si-glass | FG455/600 | 9 | 0.6 | milled |
| carbon | C M150 4.0/240-UN | 7.2 | 0.15 | milled |
| SiC | SiC SF-7 | 7 | 0.09 | milled |
| SiC | SiC SF-1 | 1 | 0.07 | milled |
| ECR-Glass | ECR 416/3 | 17 | 3 | chopped |
| basalt | stewabas 465/4 | 14 | 4 | chopped |
| zylon | Zylon AS | 12 | 1 | chopped |
| e-glass | E-Glass FGCS 469/6 | 10 | 6 | chopped |
| e-glass | E-Glass FGCS 469/3 | 10 | 3 | chopped |
| carbon | C 4.0/240-G100 | 7.2 | 3 | chopped |

Except for the different fibers that are used all the extrudates batches are the same in that they have the same shape and approximately the same porosity. Each batch was analyzed in accordance with the 1 meter drop test described in Example 1.

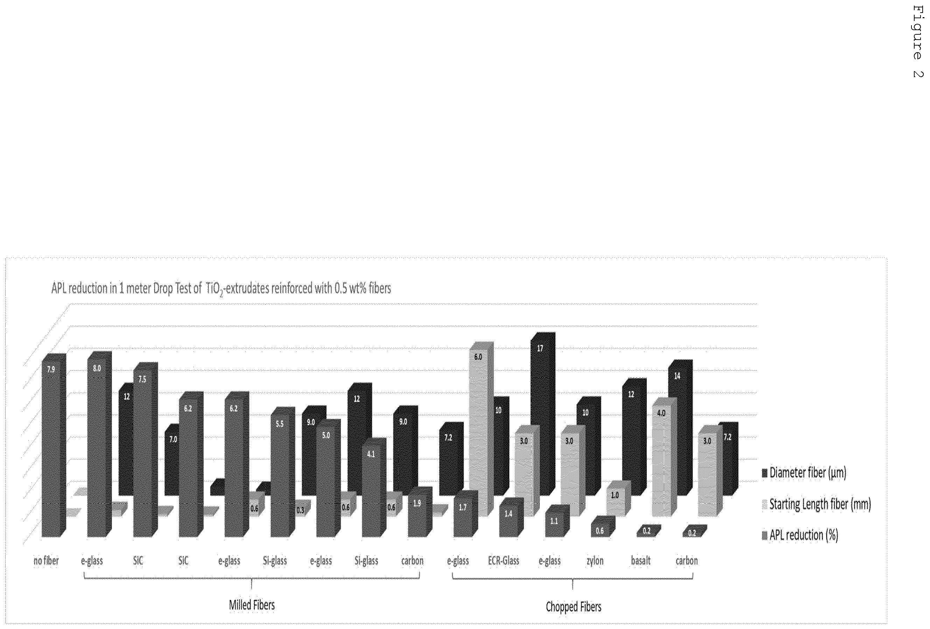

In figure 2 the results are depicted. The Titania extrudates with no fibers are listed on the left. The vertical scale is chosen in such a way that the APL decrease, the longs reduction and the fines make of extrudates without fibers are maximum and at the same level. For a fairer comparison the data is converted to 0.3 vol% (corresponding to 0.5 wt% fibers in the initial mixture) because the amount of fibers plays a role in the reinforcement and not the weight of the fibers.

As depicted in figure 2. all fibers are reinforcing the extrudates. The inventors noted that there seems to be a relation between the starting fiber length and the strength of the extrudates. Longer starting lengths of the fiber tend to give less breakage in the one-meter drop test. However, the starting length is not the actual fiber length in the extrudate. Mulling during compaction breaks the fibers up. Basalt and chopped glass fibers, for example, break up to a length of approximately 0.2 - 0.3 mm in the extrudate.

There also seems to be a trend that when chopped fibers are added, less breakage occurs. On average chopped fibers have longer starting length.

The reinforcement of the chopped glass, basalt, zylon and carbon fibers is substantial. The fines generated by fiber reinforced extrudates, in the fall test is less than half what is generated by unreinforced titania extrudates. The length reduction data is also clear. Adding only 0.3 vol% (0.3 - 0.6 wt%) of fibers to the extrusion mix results in extrudates that hardly break.

### Example 4.

To investigate the strength of cobalt/titania extrudates on different stages in the production, batches of green extrudates with and without fibers were dried and calcined at different temperatures. Of each batch the strength was determined with the one-meter drop test.

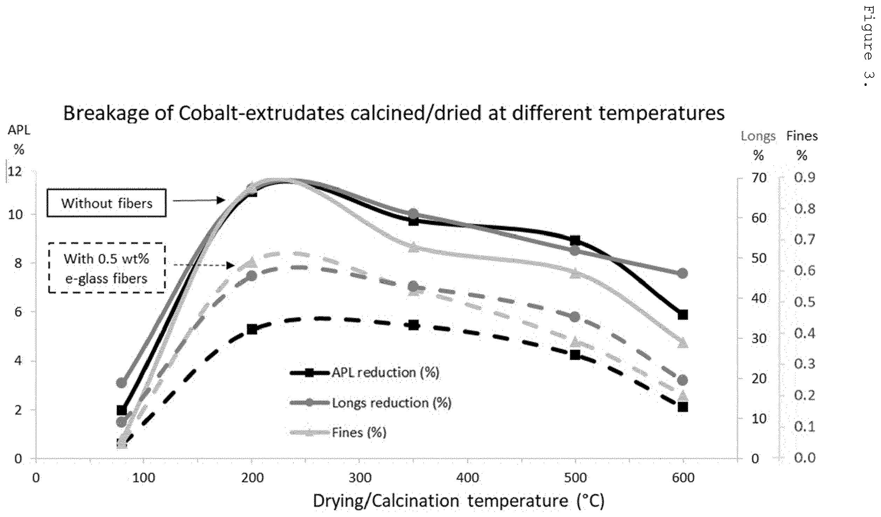

Similar results as in the preceding examples were obtained for these cobalt extrudates. The dried only extrudates are strong and do not need fiber reinforcement. After calcining of the extrudates in which additives are removed and the cobalt is oxidized, the extrudates are weakened. Increasing the calcination temperature from 200 to 600 °C the sintering of titania increases the strength. The results are depicted in Figure 3 (solid line without fibers, broken line with fibers). The presence of fibers increases the strength of the catalyst particles further in this calcine temperature range. The fibers reinforce the samples over the whole drying/calcining temperature range.

### Example 5.

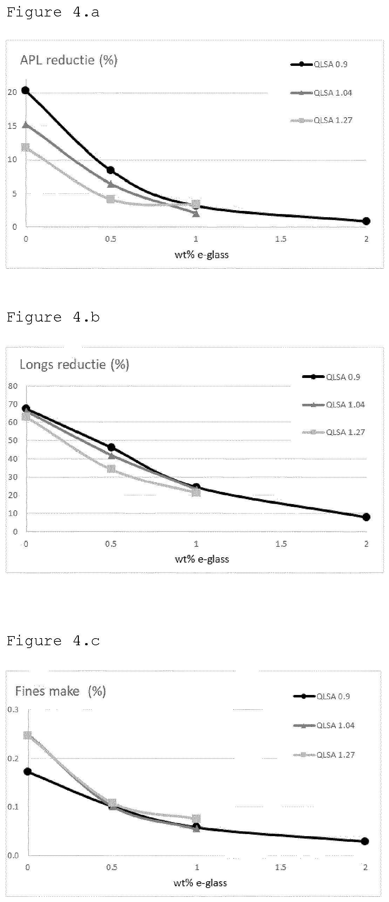

To determine whether it is possible to produce quadrilobed extrudates (QLSA), four batches of mix containing 25 wt% cobalt were made. One contains no fibers and the others contain respectively 0.5, 1 and 2 wt% e-glass fibers. Each batch was extruded with a 2.5 inch extruder using QLSA dies with different diameters. After drying, the extrudates were calcined at 600 °C and sized to 3.5 mm. 1 Meter drop tests were done with all the batches. The results are shown in Figure 4.

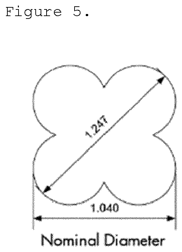

The QLSA extrudates produced have nominal diameters of 1.27, 1.04 and 0.9 mm. The nominal diameter is depicted in Figure 5. In all cases good results are obtained.

Figure 4 a shows APL reduction. Figure 4 a shows that the extrudates brake more easily as the diameter decreases. This trend is less apparent for the longs break (Figure 4b) and fines make (Figure 4c). The inventors note that, fines make and overall breakage is substantially worse for the catalyst particles of the same dimensions without fiber reinforcement. Production of unreinforced extrudates having the tested dimensions with an industrial scale process is not possible or results in a low APL ad an unwanted high amount of breakage and fines.

## Claims

1. A shaped hydrogenation catalyst particle comprising a catalytically active metal, inert fibers and a support material wherein:
- the fibers have a length in the range of 0.1 to 6.0 mm and an aspect ratio of at least 10;
- the catalyst particle has an aspect ratio of at least 2; and
- the catalyst has an having a surface to volume (S/V) ratio of at least 3.0 mm-1

2. The shaped hydrogenation catalyst particle according to claim 1 wherein the inert fibers are composed of a material selected from the group consisting of silica, alumina, titania, silicon carbide, titanium carbide, carbon, E glass, synthetic material, natural material or combinations thereof.

3. The shaped hydrogenation catalyst particle according to claim 1 or 2 wherein the support material is a ceramic material and preferably is selected from the group consisting of silica, titania, alumina, zirconia or combinations thereof.

4. The shaped hydrogenation catalyst particle according to any one of the preceding claims wherein the particles have a cylindric, open-ring shape or a cross sectional dilobed, trilobed, star, or quadrilobed shape.

5. The shaped hydrogenation catalyst particle according to any one of the preceding claims wherein active metal is selected from the group consisting of Fe, Co, Ru, Ni, Re, or combinations thereof.

6. The shaped hydrogenation catalyst particle according to any one of the preceding claims further comprising one or more promoters, preferably the one or more promoters is selected from the group consisting of Pt, Pd, Re, Mn, V, Ca, Mg, Zn, Zr, Na, K, Li, F, Cl, I or combinations thereof.

7. The shaped hydrogenation catalyst particle according to any one of the preceding claims wherein at least ...% of the fibres are substantially orientated along the longitudinal axis of the shaped catalyst.

8. The shaped hydrogenation catalyst particle according to any one of the preceding claims wherein the catalyst catalyzes the Fischer-Tropsch reaction and the active metal is selected from the group consisting of Cobalt, Iron, Ruthenium, nickel or combinations thereof

9. The shaped hydrogenation catalyst particle according to any one of the preceding claims wherein the catalyst catalyzes the Fischer-Tropsch reaction and the promoter element is selected from the group consisting Pt, Pd, Re, Mn, V, Ca, Mg, Zn, Zr, Na, K, Li, F, Cl, I or combinations thereof

10. The shaped hydrogenation catalyst particle according to any one of the preceding claims wherein the porosity of the particle is at least 30 vol%.

11. A process for hydrogenating a reactant comprising the steps of:
- Providing a gas mixture comprising hydrogen and a further reactant;
- performing a hydrogenation reaction using the mixture as obtained in step (a); and
- recovering a hydrogenated product and optionally an off-gas from the hydrogenation reaction;
wherein step (b) comprises the step of contacting the gas mixture of step (a) with a fixed bed comprising the catalyst according to any one of the preceding claims.

12. The process according to claim 11 wherein the hydrogenation reaction is a Fischer-Tropsch reaction, the gas mixture comprises hydrogen and carbon monoxide and the hydrogenated product comprises paraffins.

13. The process according to claim 11 or 12 wherein the gas mixture is obtained from a partial oxidation reaction wherein a carbonaceous gas and an oxidative gas are provided to a partial oxidation reactor and converted into the gas mixture.

14. The process according to claim 13 wherein the step of contacting comprises:
- A first step in which synthesis gas is contacted with a Fischer-Tropsch catalyst obtaining a second gas mixture;
- A second step of contacting the second gas mixture with the catalyst according to the previous claims to obtain a third gas mixture;
wherein the second and third gas mixtures comprise water/steam, hydrogen, carbon monoxide, carbon dioxide and hydrocarbons.

15. The process according to any one of claims 11 to14 wherein the process is carried out at a temperature in the range from 125 to 350°C, preferably 200 to 260°C, and at a pressure in the range from 5 to 150 bar, preferably 5-80 bar.
